# EUROPEAN PATENT APPLICATION

(11) **EP 3 696 690 A1**
(43) Date of publication of application: **19.08.2020**
(21) Application number: 19157757.6
(22) Date of filing: 18.02.2019
(51) Int. Cl.: G06F 16/27

(54) **METHOD OF SYNCHRONIZING A NODE DATABASE WITH A MASTER DATABASE, DEVICE**

(71) Applicant: Atos Information Technology GmbH, 81739 München (DE)
(72) Inventor: TASCHNER, Jan, 33154 Salzkotten (DE)
(74) Representative: Patentanwaltskanzlei WILHELM & BECK

(57) **Abstract**

Provided is a method of synchronizing a first node database of a first node of a data structure with a master database of a master server, wherein the method comprises a first operating mode and a second operating mode. In the first operating mode a direct synchronization between the first node database and the master database is carried out. In the second operating mode the first node database is synchronized with a second node database.

## Description

The present invention relates to a method of synchronizing a node database with a master database, a device carrying out the method and a computer program equipped to carry out the method.

In distributed systems a master server may act as a central data storage, providing a master database. Client devices in the distributed system, which may be nodes of the distributed system, are required to either access the master database or to access a local, synchronized copy of the master database, particularly a node database. A synchronization between the master database and the node database may occur in regular periods. If a connection to the master server is not available, said synchronization may be temporarily disturbed or temporarily impossible. A client device then has no access to an up-to-date version of the master database, which may cause problems.

State of the art are methods of synchronizing data between a node and a master server include relational database management systems (RDBMS), Non Structured Query Language (NoSQL), distributed caches and hash tables or consensus protocols. These methods allow for consistency of the synchronized data.

The data synchronization methods of the state of the art are IP-based, requiring an IP and a port to establish a TCP connection. The synchronization is only possible as long as the TCP connection is available. There are no means for an alternative communication channel implemented in these methods.

Additionally, state of the art methods do not provide mechanisms to select the data for synchronization on single data object level.

An assignment for the present invention is to allow for a synchronization method including a more robust synchronization of a node database with a master database, leading to less problems should a connection to the master server not be available. Another assignment for the invention is to allow the selection of data for synchronization on data object level. Other assignments of the invention are to provide a computer program to carry out the method and to provide a device carrying out the method.

A solution of these assignments is provided by the independent claims. Embodiments of the invention are provided by the dependent claims.

In a method of synchronizing a first node database of a first node of a data structure with a master database of a master server, the method comprises a first operating mode and a second operating mode. The first operating mode is applied when a first connection to the master server is available. The second operating mode is applied when the first connection is not available. Initially, the master database is requested from the master server in a request step.

In the first operating mode, the following steps are performed:
- Receiving the master database at least partially in a first receiving step;
- Checking the master database for unknown and known objects in a first checking step;
- Checking the known objects for a version in a second checking step; and
- Replacing known objects with older versions in the first node database with objects with newer version from the master database in a first replacing step.

Therefore, in the first operating mode, a synchronization of the master database and the first node database takes place, leading to an up-to-date first node database available for the first node.

In the second operating mode, the following steps are performed:
- Identifying that the first connection is not available in a identifying step;
- Establishing a second connection to a second node in a connecting step;
- Synchronizing the first node database with a second node database of the second node in a node synchronization step.

After the request step, no answer to the request of the master database is received. Thusly, it may be identified that the first connection is unavailable. This may be due to a timeout after the request step. Subsequently, the first node attempts to establish a second connection to a second node within the data structure. The second node either may be connected to the master server or may have lost its communication channel to the master server as well. In the first case, the second node database is synchronized with the master database, and therefore, the first node database is also up-to-date after the node synchronization step. In the second case, the first node database may not be up-to-date with the master database, but updated using data from the second node database and therefore more up-to-date than initially. The method thusly allows for an additional communication channel if the communication channel to the master server is lost.

The data structure may also comprise more than two nodes synchronizing their node databases in the second operating mode.

The nodes may be edge devices, acting as service platform nodes without providing a user interface and/or mobile devices comprising a user interface.

The first connection may be a data communication channel between the first node and the master server. Objects of either the master database or the first node database may be transferred via the first connection.

The version of the objects may be identified using a timestamp or a version number. Particularly, the version may be identified using a Lamport-timestamp.

In one embodiment, in a first adding step, at least one unknown object, particularly any unknown objects are added to the first node database. This improves synchronization of the databases.

In one embodiment, objects with newer version in the first node database are sent to the master server in the first operating mode. Therefore, the master database may be updated, leading to a more up-to-date master database.

In one embodiment, the first connection is established as broad bandwidth connection, particularly as an internet connection, Wireless-LAN or LAN connection.

Therefore, in the first operating mode, the whole master database may be received by the first node, as the bandwidth of the first connection does not confine the data volume to be transferred. Alternatively, only a part of the master database may be received due to a pre-selection of data. In this case, the data volume to be transferred may be reduced.

In one embodiment, the second connection is established as low bandwidth connection, particularly as peer-to-peer connection, Bluetooth connection, infrared connection, ad-hoc wireless LAN connection and/or near-field communication. Using this approach, it may be necessary to implement a pre-selection of data transferred during the node synchronization step to reduce the data volume to be transferred.

In one embodiment, objects in the master database and/or the node databases comprise selection criteria, and wherein during the first receiving step and/or during the node synchronization step objects are selected according to the selection criteria. The selection criteria may be associated to the objects, allowing for a selection of objects to be transferred and/or of objects to be synchronized. These selection criteria allow for a reduction of the data volume to be transferred, as the data transferred during the first receiving step and/or during the node synchronization step may be pre-selected and only objects to be included into the first node database are transmitted and therefore received by the first node. The databases (master database, node databases) can include an information file stating an information about content of the objects and a version of the objects within the databases. The content information may include the type of objects. By comparing the versions, the objects to be transferred may be selected. Alternatively or additionally, the selection criteria may be used to select the objects to be transferred.

In one embodiment, the selection criteria include time and/or location. If the first connection is not available, the location as selection criterion additionally allows for a selection of objects within the databases dependent of a location information. The selection may include the selection of objects in the vicinity of the first node, particularly within a pre-defined radius. This radius may be for instance five kilometers, one kilometer, five hundred meters or one hundred meters.

It is also possible to select objects in the vicinity of the first node, particularly within a pre-defined radius, if the first operation mode is applied.

In one embodiment, objects with newer version in the first node database are sent to the second node in the second operating mode. This allows for better synchronization of the first node database and the second node database. Especially a third node synchronizing its database with the second node database may be brought to a more up-to-date state this way.

In one embodiment, after a pre-defined timespan during which the second operating mode is executed, reconnection to the master server is attempted via the first connection. This means that the first node attempts to reconnect to the master server after the pre-defined timespan. If the reconnect to the master server is successful, the first operating mode of the method may be executed.

In one embodiment, the first node database, the second node database and the master database are transformed using a data-interchange format. This format may be used as a universal, language-independent data format. Particularly, the data format of the databases may be different. By serializing the databases into a data-interchange format, a universal data format is provided. Each node and the master server then do not need to know the data format for the other database, but only how to serialize and deserialize its own data format of the database to a data-interchange format. This data-interchange format may for example be JacaScript Object Notation (JSON), Binary JSON (BSON), YAML Ain't Markup Language (YAML) or any other applicable data-interchange format.

In one embodiment, the node synchronization step comprises:
- Receiving the second node database at least partially in a second receiving step;
- Checking the second node database for unknown and known objects in a third checking step;
- Checking the known objects for a version in a fourth checking step; and
- Replacing known objects with older versions in the first node database with objects with newer version from the second node database in a second replacing step.

Thusly, the node synchronization step is similar to the synchronization performed during the first operating mode in this embodiment.

In one embodiment, in a second adding step, at least one unknown object, particularly any unknown objects are added to the first node database. This improves synchronization of the databases.

In one embodiment, the first node database and/or the master database comprise information about outstanding and/or completed tasks. These tasks may be tasks to be performed during emergency management. Personnel deployed to a catastrophe site may need to perform certain tasks to reduce effects of a catastrophe. This personnel may be equipped with a mobile device, acting as a node, displaying the tasks to be performed. The master database comprises the tasks and the information if these tasks are still outstanding or already completed. If the first connection is interrupted, particularly due to the catastrophe having effects on communication networks, the mobile devices and therefore the nodes may switch to the second operating mode allowing for an additional local synchronization of the node databases to improve information about the tasks for all nodes.

The invention further comprises a computer program comprising a sequence of computer-executable instructions which, when executed by a computer, cause the computer to carry out the method according to any of claims 1 to 11.

The invention further comprises a device for carrying out the method. The device may act as the first node of the method.

In one embodiment, the device additionally comprises a computer-readable storage medium, wherein the computer program is stored.

The device may be a mobile phone or a tablet PC or a single board computer. The mobile phone and/or the tablet PC may act as a mobile device. The single board computer may be an edge device organizing the synchronization of the node databases of mobile devices.

The above-described properties, features and advantages of this invention as well as the way in which they are achieved, will become more clearly and comprehensively understandable in connection with the following description of the exemplary embodiments, which will be explained in more detail in connection with the drawings in which, in schematic representation in each case:
- Fig. 1: a flow diagram of a method of database synchronization;
- Fig. 2: a data structure;
- Fig. 3: two databases during synchronization;
- Fig. 4: another data structure;
- Fig. 5: a flow diagram of a node synchronizing step;
- Fig. 6: another data structure; and
- Fig. 7: a mobile device.

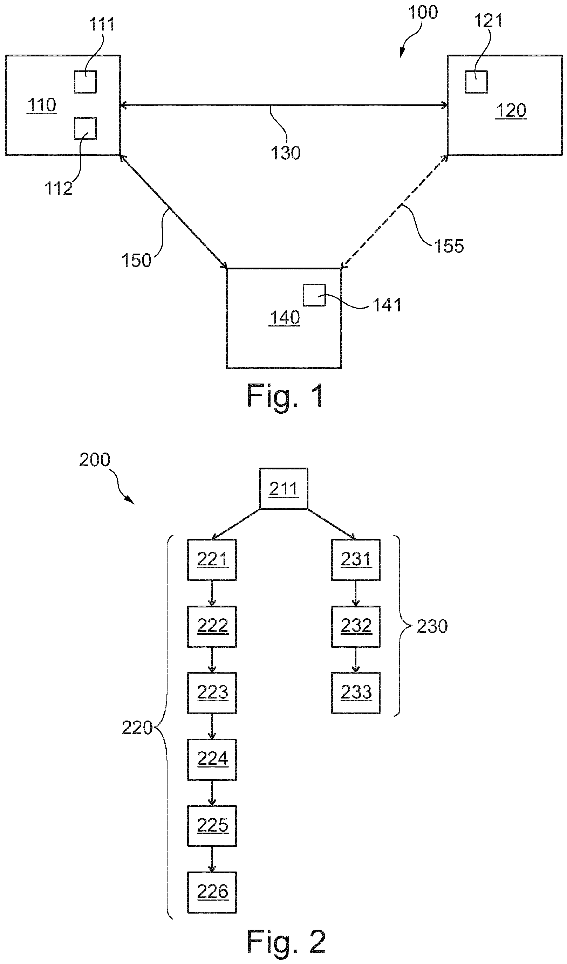

Fig. 1 shows a data structure 100 in which a method according to the invention may be executed. A first node 110 comprises a first node database 111 and an optional storage medium 112. The first node 110 is connected to a master server 120 with a first connection 130. The master server 120 comprises a master database 121.

A second node 140 with a second node database 141 is connected to the first node 110 with a second connection 150. The second node 140 may be connected to the master server 120 with an optional third connection 155. To illustrate that the third connection 155 is optional, the third connection 155 is displayed with a dashed line in Fig. 1, whereas the first connection 130 and the second connection 150 are displayed with a continuous line.

The master server 120 may have additional connections not shown in Fig. 1, particularly to more nodes and/or to additional servers providing data and/or server based applications.

Fig. 2 shows a flow diagram of a method 200 according to the invention, which may be executed in the data structure 100 of Fig. 1. The method 200 can be used to synchronize the first node database 111 of the first node 110 of the data structure 100 with the master database 121 of the master server 120. The method 200 comprises a first operating mode 220 and a second operating mode 230. The first operating mode 220 is applied when the first connection 130 of the first node 110 to the master server 120 is available. The second operating mode 230 is applied when the first connection 130 is not available. In an initial request step 211 the master database 121 is requested from the master server 120.

If the request step 211 leads to a transfer of the requested master database 121 or to an answer to the request from the master server 120, the first operating mode 220 is applied. In the first operating mode 220, a first receiving step 221 is carried out, in which the master database 121 is at least partially received. Subsequently, a first checking step 222 is carried out, in which the master database 121 is checked for unknown and known objects. Particularly, in the first checking step 222 it is evaluated for every object within the master database 121 received in the first receiving step 221 if said object is already part of the first node database 111. If the object is already part of the first node database 111, said object is classified as a known object. If the object is not part of the first node database 111, said object is classified as an unknown object.

Subsequently, a second checking step 224 is carried out, in which the known objects are checked for a version. In a first replacing step 225 the known objects with older version in the first node database 111 are replaced with the known objects with newer version from the master database 121.

If the request step 211 does not lead to a transfer of the requested master database 121 or to an answer to the request from the master server 120, the second operating mode 230 is applied. In the second operating mode 230 an identifying step 231 is carried out in which it is identified that the first connection 130 is not available. In a connecting step 232 the second connection 150 to the second node 140 is established. Subsequently, in a node synchronizing step 233 the second node database 141 is synchronized with the first node database 111.

An optional first adding step 223 is shown between the first checking step 222 and the second checking step 224. In the first adding step 223, at least one unknown object, particularly all unknown objects identified during the first checking step 222 is/are added to the first node database 111. The first adding step 223 may be carried out after the second checking step 224 or the first replacing step 225 as well.

In one embodiment, an additional first sending step 226 is carried out. The optional first sending step 226 is also displayed in Fig. 2. In the first sending step 226 objects with newer versions within the first node database 111 and/or objects, which are part of the first node database 111, but not part of the master database 121 are sent to the master database 121.

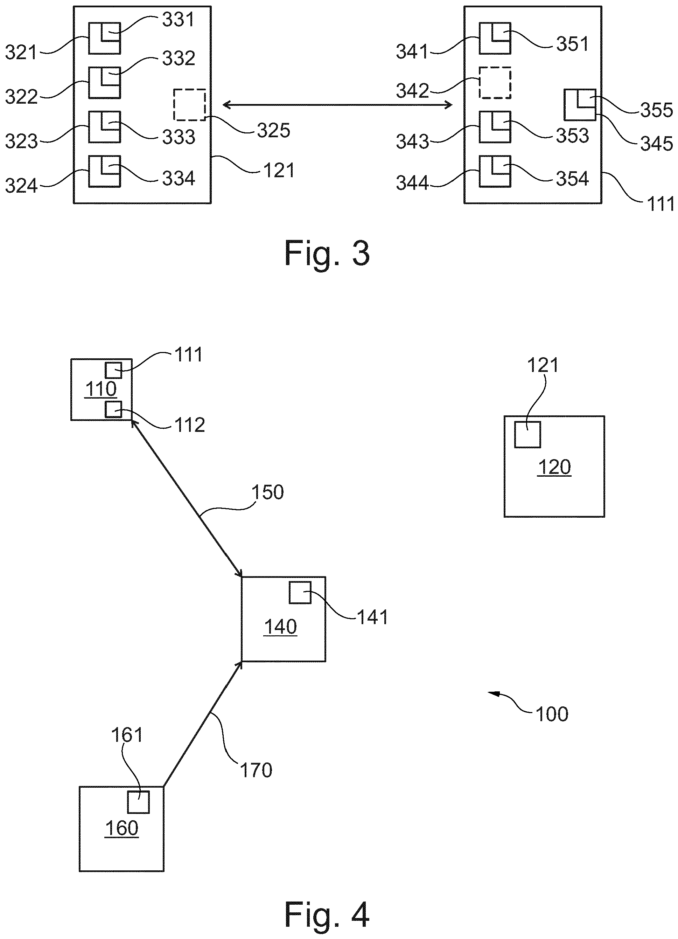

Fig. 3 shows the master database 121 and the first node database 111 during the first operating mode 220. The master database 121 comprises a first master object 321, a second master object 322, a third master object 323 and a fourth master object 324. A first master version 331 is assigned to the first master object 321. A second master version 332 is assigned to the second master object 322. A third master version 333 is assigned to the third master object 323. A fourth master version 334 is assigned to the fourth master object 324. The first node database 111 comprises a first node object 341, a third node object 343, a fourth node object 344 and a fifth node object 345. A first node version 351 is assigned to the first node object 341. A third master version 353 is assigned to the third node object 343. A fourth node version 354 is assigned to the fourth node object 344. A fifth node version 355 is assigned to the fifth node object 345.

During the first checking step 222 it is possible to identify the second master object 322 as unknown object as no second node object exists. Therefore, in the first adding step 223 the second master object 322 is added to the first node database 111 forming a second node object 342. To emphasize on the fact that the second node object 342 is added to the first node database 111, the second node object 342 is displayed with a dashed line. The remaining master objects 321, 323, 324 are known objects, as corresponding node objects 341, 343, 344 exist. For these objects the master versions 331, 333, 334 are compared to the corresponding node versions 351, 353, 354 in the second checking step 224. If any master version 331, 333, 334 is newer than the corresponding node version 351, 353, 354, the corresponding node object 341, 343, 344 is replaced with the corresponding master object 321, 323, 324 in the first replacing step 225. If for instance the third master version 333 is newer than the third node version 353, the third node object 343 is replaced with the third master object 323.

In the optional first sending step 226 the fifth node object 345 is sent to the master database 121, subsequently forming a fifth master object 325. To emphasize on the fact that the fifth master object 325 is added to the master database 121, the fifth master object 325 is displayed with a dashed line. If any master version 331, 333, 334 is older than the corresponding node version 351, 353, 354, the corresponding node object 341, 343, 344 may be sent to the master database in the optional first sending step 226 additionally or alternatively. If for instance the fourth master version 334 is older than the fourth node version 354, the fourth node object 344 is sent to the master database 121.

The methods explained for the synchronization of the master database 121 and the first node database 111 with regard to Fig. 3 may also be used during the synchronization of the first node database 111 with the second node database 141 during the node synchronization step 233.

In one embodiment the first connection 130 is established as a broad bandwidth connection, particularly as an internet connection, Wireless-LAN or LAN connection. In one embodiment, the second connection 150 is established as a low bandwidth connection, particularly as peer-to-peer connection, Bluetooth connection, infrared connection, ad-hoc wireless LAN connection and/or near-field communication.

In one embodiment, the objects of the master database 121, for instance the master objects 321, 322, 323, 324, 325 and/or the objects in the node database 111, particularly the node objects 341, 342, 343, 344, 345 comprise selection criteria. During the first receiving step 221 and/or during the node synchronization step 233 objects are selected according to the selection criteria. The selection criteria may include time and/or location. Thusly, the selection criteria allow for a selection of objects to be synchronized and/or transferred.

Fig. 4 shows another data structure 100 which corresponds to the data structure 100 of Fig. 1 as far as no differences are described in the following. The second node 140 is connected to a third node 160 with a fourth connection 170. The third node 160 comprises a third node database 161. The third node database 161 is synchronized with the second node database 141. Therefore, the during the synchronization of the second node database 141 with the first node database 111 the first node database 111 is also synchronized to the third node database 161. The nodes 110, 140, 160 are not connected to the master server 120 in Fig. 4. This might be due to a loss of internet connectivity or due to other technical problems. In this case, the first node 110 switches into the second operating mode 230. The second node 140 and the third node 160 may switch to the second operating mode as well. The node databases 111, 141, 161 are then synchronized to provide the most actual available data for each node 110, 140, 160. The synchronization between the second node database 141 and the third node database 161 may be similar to the synchronization between the first node database 111 and the second node database 141 during the node synchronization step 233.

In one embodiment the first node 110 attempts to establish a reconnection to the master server 120 via the first connection 130 after a pre-defined timespan has expired. Additionally or alternatively, the second node 140 and/or the third node 160 may also try to establish a renewed connection to the master server 120.

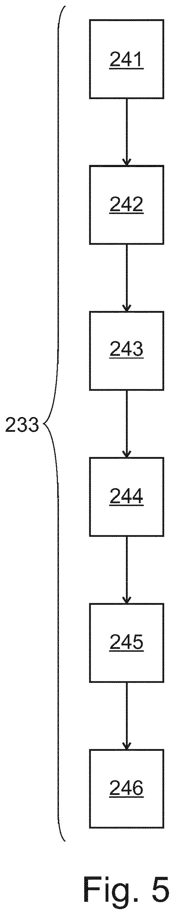

Fig. 5 shows a flow diagram of one embodiment of the node synchronization step 233. In the node synchronization step 223, a second receiving step 241 is carried out, in which the second node database 141 is at least partially received. Subsequently, a third checking step 242 is carried out, in which the second node database 141 is checked for unknown and known objects. Particularly, in the third checking step 242 it is evaluated for every object within the second node database 141 received in the second receiving step 241 if said object is already part of the first node database 111. If the object is already part of the first node database 111, said object is classified as a known object. If the object is not part of the first node database 111, said object is classified as an unknown object.

In a subsequent, optional second adding step 243, at least one of the unknown objects identified during the third checking step 242, particularly all unknown objects identified during the third checking step 242 is/are added to the first node database 111. Additionally, a fourth checking step 244 is carried out, in which the known objects are checked for a version. In a second replacing step 245 the known objects with older version in the first node database 111 are replaced with the known objects with newer version from the second node database 141. The second adding step 243 may be carried out after the fourth checking step 244 or the second replacing step 245 as well.

In one embodiment, an additional second sending step 246 is carried out. The optional second sending step 246 is also displayed in Fig. 5. In the second sending step 246 objects with newer versions within the first node database 111 and/or objects, which are part of the first node database 111, but not part of the second node database 141 are sent to the second node database 141.

In one embodiment, the first node database 111, the second node database 141 and the master database 121 are transformed using a data-interchange format. This format may be used as a universal, language-independent data format. Particularly, the data format of the databases 111, 121, 141 may be different. By serializing the databases 111, 121, 141 into a data-interchange format, a universal data format is provided. Each node 110, 140 and the master server 120 then do not need to know the data format for the other database, but only how to serialize and deserialize its own data format of the database to a data-interchange format.

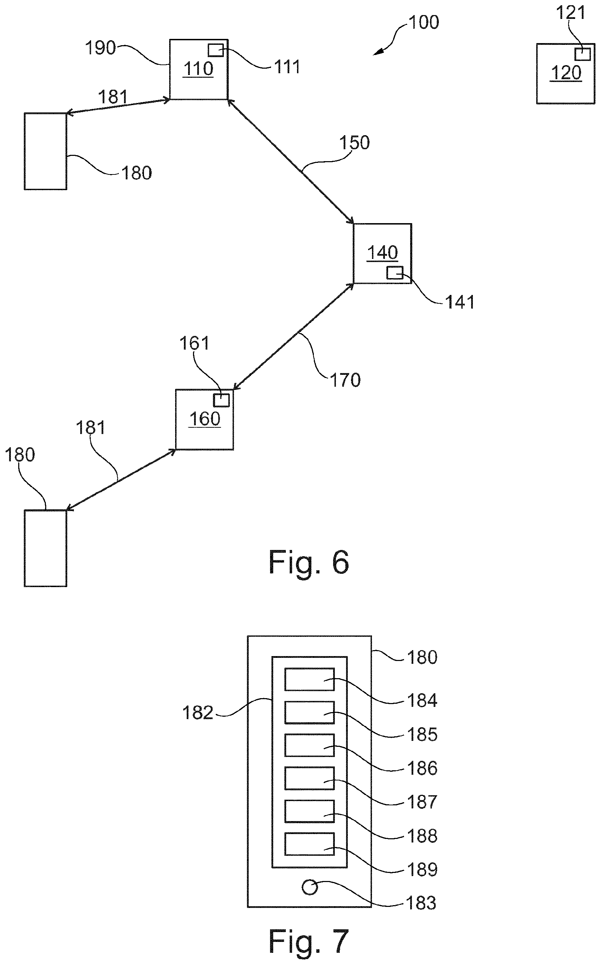

Fig. 6 shows another data structure 100 which corresponds to the data structure 100 of Fig. 4 as far as no differences are described in the following. The first node 110 is assigned to a device 190. The device 190 comprises means to carry out the method 200. The data structure 100 further comprises two mobile devices 180. One mobile device 180 is connected to the first node 110 with a device connection 181. The other mobile device 180 is connected to the third node 160 with a device connection 181. The mobile devices 180 may use the corresponding device connections 181 to access the first node database 111 and the third node database 161 respectively. In this case, the first node 110, the second node 140 and/or the third node 160 may be edge devices organizing the synchronization of the node databases 111, 141, 161 and the synchronization of the node databases 111, 141, 161 with the master database 121 if a connection to the master server is available. Applications running on the mobile devices 180 may use the data provided by the node databases 111, 141, 161.

Alternatively to the embodiment in shown in Fig. 6, the mobile devices 180 may act as additional nodes within the data structure 100 and also comprise a node database. In this case, one of the mobile devices 180 may also act as the first node 110 within the method 200 and additionally establish the first connection 130 to the master server.

In one embodiment, the first node database 111 comprises information about outstanding and/or completed tasks. These tasks may be tasks to be performed during emergency management. Personnel deployed to a catastrophe site may need to perform certain tasks to reduce effects of a catastrophe. This personnel may be equipped with a mobile device 180, acting as first node 110 or connected to the first node 110, which in this case may be an edge device. The mobile device 180 may display the tasks to be performed. The master database 121 comprises the tasks and the information if these tasks are still outstanding or already completed. If the first connection 130 is interrupted, particularly due to the catastrophe having effects on communication networks, the mobile devices 180 and therefore the nodes 110, 140, 160 may switch to the second operating mode 230 allowing for an additional local synchronization of the node databases 111, 141, 161 to improve information about the tasks for all nodes 110, 140, 160. In this case, selection criteria such as location and/or time may be useful to reduce the bandwidth needed for the node synchronization via low bandwidth connections, as only tasks within a certain radius need to be finished to reduce the effects of the catastrophe. Tasks assigned to different locations therefore do not need to be synchronized and therefore bandwidth during the synchronization in the second operating mode 230 may be saved. Additionally or alternatively, only the execution of tasks created after the occurrence of the catastrophe may be needed. Therefore, tasks with a preceding creating time may be excluded from the database synchronization to further save bandwidth.

It is possible for the deployed personnel to bring the nodes 110, 140, 160 with them.

Fig. 7 shows a mobile device 180 with a display 182 and an input unit 183. On the display a first task 184, a second task 185, a third task 186, a fourth task 187, a fifth task 188 and a sixth task 189 are displayed. A human using this mobile device 180 may select one of the tasks 184, 185, 186, 187, 188, 189 and confirm to execute said task. The mobile device 180 then sends this information to a node 110, 140, 160 within the data structure 100 via the device connection 181 or is configured as node 110, 140, 160. Subsequently the status information about the task selected to be executed may be synchronized using the method described above.

The invention further includes a computer program comprising a sequence of computer-executable instructions which, when executed by a computer, cause the computer to carry out the method 200.

The invention further includes a device for carrying out the method 200, the device particularly acting as the first node 110 of the method 200. The device may comprise a computer-readable storage medium 112, and the computer program may be stored within the storage medium 112. In Fig. 1 such a storage medium 112 is displayed. The device may be a handheld device 180 like a mobile phone or a tablet PC. Alternatively, the device may be a single board computer.

The invention has been illustrated and described in detail with the preferred exemplary embodiments. The invention is nevertheless not restricted to those examples disclosed. Rather, other variants may be derived therefrom by the person skilled in the art without departing from the protective scope of the invention.

### Reference List

- 100: data structure
- 110: first node
- 111: first node database
- 112: storage medium
- 120: master server
- 121: master database
- 130: first connection
- 140: second node
- 141: second node database
- 150: second connection
- 155: third connection
- 160: third node
- 161: third node database
- 170: fourth connection

- 180: mobile device
- 181: device connection
- 182: display
- 183: input unit
- 184: first task
- 185: second task
- 186: third task
- 187: fourth task
- 188: fifth task
- 189: sixth task
- 190: device

- 200: method
- 211: request step
- 220: first operating mode
- 221: first receiving step
- 222: first checking step
- 223: first adding step
- 224: second checking step
- 225: first replacing step
- 226: first sending step
- 230: second operating mode
- 231: identifying step
- 232: connecting step
- 233: node synchronizing step
- 241: second receiving step
- 242: third checking step
- 243: second adding step
- 244: fourth checking step
- 245: second replacing step
- 246: second sending step

- 321: first master object
- 322: second master object
- 323: third master object
- 324: fourth master object
- 325: fifth master object
- 331: first master version
- 332: second master version
- 333: third master version
- 334: fourth master version
- 341: first node object
- 342: second node object
- 343: third node object
- 344: fourth node object
- 345: fifth node object
- 351: first node version
- 353: third node version
- 354: fourth node version
- 355: fifth node version

## Claims

1. A method (200) of synchronizing a first node database (111) of a first node (110) of a data structure (100) with a master database (121) of a master server (120), wherein the method (200) comprises a first operating mode (220) and a second operating mode (230), wherein the first operating mode (220) is applied when a first connection (130) to the master server (120) is available and wherein the second operating mode (230) is applied when the first connection (130) is not available, wherein the master database (121) is requested from the master server (120) in a request step (211), wherein the first operating mode (220) comprises the following steps:
- Receiving the master database (121) at least partially in a first receiving step (221);
- Checking the master database (121) for unknown and known objects in a first checking step (222);
- Checking the known objects for a version (231, 232, 233, 234, 251, 253, 254, 255) in a second checking step (224); and
- Replacing known objects with older version (231, 232, 233, 234, 251, 253, 254, 255) in the first node database (111) with objects with newer version (231, 232, 233, 234, 251, 253, 254, 255) from the master database (121) in a first replacing step (225);
wherein the second operating mode (230) comprises the following steps:
- Identifying that the first connection (130) is not available in a identifying step (231);
- Establishing a second connection (150) to a second node (140) in a connecting step (232);
- Synchronizing the first node database (111) with a second node database (141) of the second node (140) in a node synchronization step (233) .

2. The method according to claim 1, wherein at least one unknown object is added to the first node database (111) in a first adding step (223).

3. The method (200) according to claim 1 or 2, wherein objects with newer version (231, 232, 233, 234, 251, 253, 254, 255) in the first node database (111) are sent to the master server (120) in the first operating mode (220).

4. The method (200) according to any of claims 1 to 3, wherein the first connection (130) is established as broad bandwidth connection, particularly as an internet connection, Wireless-LAN or LAN connection.

5. The method (200) according to any of claims 1 to 4, wherein the second connection (150) is established as low bandwidth connection, particularly as peer-to-peer connection, Bluetooth connection, infrared connection, ad-hoc wireless LAN connection and/or near-field communication.

6. The method (200) according to any of claims 1 to 5, wherein objects in the master database (121) and/or the node databases (111, 141) comprise selection criteria, and wherein during the first receiving step (221) and/or during the node synchronization step (233) objects are selected according to the selection criteria.

7. The method (200) according to claim 6, wherein the selection criteria include time and/or location.

8. The method (200) according to any of claims 1 to 7, wherein objects with newer version (231, 232, 233, 234, 251, 253, 254, 255) in the first node database (111) are sent to the second node (140) in the second operating mode (230).

9. The method (200) according to any of claims 1 to 8, wherein after a pre-defined timespan during which the second operating mode (230) is executed, reconnection to the master server (120) is attempted via the first connection (130).

10. The method (200) according to any of claims 1 to 9, wherein the databases (111, 121, 141) are transformed using a data-interchange format.

11. The method (200) according to any of claims 1 to 10, wherein the node synchronization step (233) comprises:
- Receiving the second node database (141) at least partially in a second receiving step (241) ;
- Checking the second node database (141) for unknown and known objects in a third checking step (242);
- Checking the known objects for a version (231, 232, 233, 234, 251, 253, 254, 255) in a fourth checking step (244); and
- Replacing known objects with older version (231, 232, 233, 234, 251, 253, 254, 255) in the first node database (111) with objects with newer version (231, 232, 233, 234, 251, 253, 254, 255) from the second node database (141) in a second replacing step (245).

12. The method (200) according to any of claims 1 to 11, wherein the first node database (111) and/or the master database (121) comprise information about outstanding and/or completed tasks.

13. A computer program comprising a sequence of computer-executable instructions which, when executed by a computer, cause the computer to carry out the method (200) according to any of claims 1 to 12.

14. A device (190) for carrying out the method (200) according to any of claims 1 to 12, the device (190) particularly acting as the first node of the method (200).

15. The device (190) according to claim 14, additionally comprising a computer-readable storage medium (112), wherein the computer program according to claim 13 is stored in the storage medium (112).
